# EUROPEAN PATENT SPECIFICATION

(11) **EP 3 444 547 B1**
(45) Date of publication and mention of the grant of the patent: **14.09.2022**
(21) Application number: 18151539.6
(22) Date of filing: 12.01.2018
(51) Int. Cl.: F25D 3/11

(54) **FOOD FREEZER AND CORRESPONDING METHOD OF EXHAUSTING FREEZING GAS**
LEBENSMITTELGEFRIERANLAGE UND ZUGEHÖRIGES VERFAHREN ZUR ABFUHR VON GEFRIERGAS
CONGÉLATEUR D'ALIMENTS ET PROCÉDÉ CORRESPONDANT D'ÉVACUATION DE GAZ DE CONGÉLATION

(30) Priority: 18.08.2017 US 201762547244 P
(43) Date of publication of application: 20.02.2019
(73) Proprietor: Linde GmbH, 82049 Pullach (DE)
(72) Inventor: BOYLES, Scott, Telford, PA Pennsylvania 18969 (US)
(74) Representative: Hofmann, Andreas

(56) References cited:
- FR-A- 1 536 626
- JP-A- S5 878 575
- JP-A- 2008 128 606
- JP-A- 2008 212 037
- JP-U- S55 168 182
- JP-U- S59 151 083
- US-A- 3 315 492
- US-A- 3 666 185
- US-A- 4 858 445
- US-A1- 2007 169 504

## Description

### Technical field of the present invention

The present invention relates to food freezers, in particular to tunnel freezers or to impingement freezers or to spiral freezers or to immersion freezers, said freezers using a freezing or a cryogenic gas to chill or freeze food products, and to apparatus or components of such freezers to remove cryogenic exhaust from same. The present invention relates to methods of exhausting freezing gas.

Reference can be made to document JP 2008-128606 A disclosing a refrigeration system and an operating method capable of preventing intrusion of moisture into an air-coolant refrigerating machine. Document US 3,315,492 reveals a freezing chamber for continuously conducting material to be frozen through an atmosphere held at subfreezing temperatures. Document US 4,783,972 discloses a cryogenic freezer having a thermally insulated tunnel-like enclosure with an entrance and an exit and means for conveying products being frozen therethrough. Products are contacted with liquid cryogen at a region generally near the entrance and a blower located closer to the entrance than to the exit controls flow of cryogen vapour. Document US 2009/0019869 A1 discloses a cryogenic freezer with cryogenic vapour control. The vapour control system is adapted to control the speed of the transition fan which moves some of the cryogen from a first cryogenic freezer to a second freezer in response to differences between the temperature of the process room, operating temperature of the cryogenic freezer, and a temperature of the exhaust.

### Technological background of the present invention

Known food freezers using cryogenic gas capture the exhaust gas in a plenum or like structure as the gas exits the freezer. Capturing the gases in this manner results in disadvantages for the freezer and exhaust operation.

Known freezers are placed in plants or factories which are also refrigerated. Such freezers "pull" from four (4) to six (6) parts of room air from the customer's plant into the exhaust to maintain an exhaust temperature at +32°F (+0°C) to reduce if not eliminate snow and ice accumulation in the freezer exhaust ductwork.

In those plants that are refrigerated, pulling large volumes of plant air into the freezer or freezers causes the temperature in the plant room to rise, thereby necessitating additional plant cooling to maintain the plant refrigerated temperature. Such corrective or compensatory cooling of the plant air is expensive and not always possible for certain plant operators.

Removing large volumes of plant air also creates negative pressures in food plants. The negative pressures can cause the introduction of bacteria into the plants which will present food safety and sanitation issues for the plant.

Refrigerated gases, such as for example cryogenic gases or cold frozen air, exiting a freezer in large amounts will increase the risk of reduced and insufficient oxygen levels in the plant and also, reduced visibility.

The additional plant air, which is not at cryogenic temperatures, introduced with increased moisture content into the exhaust results in accumulation of snow and ice in the exhaust ducting and blowers, thereby requiring the freezer to be shut down to rid same of the unwanted frozen condensate.

It has also been difficult if not impossible to date to control the air flow(s) at an interior of the known freezers, such that the air flows move in a desired direction for purposes of chilling/freezing efficiency and cost effectiveness with respect to the freezing or cryogenic substances being used.

### Disclosure of the present invention: object, solution, advantages

Starting from the disadvantages and shortcomings as described above as well as taking the prior art as discussed into account, an object of the present invention is to overcome the limitations and problems that earlier apparatus and earlier methods have experienced.

This object is accomplished by an apparatus comprising the features of claim 1 as well as by a method comprising the features of claim 11. Advantageous embodiments, expedient improvements and other optional features of the present invention are set forth herein and disclosed in the respective dependent claims.

There is basically provided herein a food freezer with internal exhaust, and more specifically a food freezer, comprising: a first housing having a first chamber arranged internally within for providing a freezing gas to a food product within the first chamber; a second housing having a second chamber arranged internally within and being in fluid communication with the first chamber for exhausting the freezing gas from the first chamber; an adjustable opening disposed in a common wall between the first and second chambers for controlling a flow of the freezing gas moving from the first chamber to the second chamber, the adjustable opening disposed to provide a flow path for the flow of the freezing gas to a region of the second chamber for exhaust from said second chamber to an area external to the first and second housings; and a gas pressure curtain comprising the exhaust and disposed at the second chamber to prevent atmosphere from the area external to the first and second housings from entering said housings.

According to an advantageous embodiment of the present invention, the adjustable opening may comprise
- a mechanical shutter or movable door type mechanism, and/or
- a pair of movable plates which co-act, and/or
- a stainless steel material sheet movable with respect to the wall
for providing the flow path between the first and second chambers-

There is also provided herein a food freezer, comprising: a first housing having a first chamber arranged internally within for providing a freezing gas to a food product within the first chamber; a second housing having a second chamber arranged internally within and being in fluid communication with the first chamber for exhausting the freezing gas from the first chamber; a baffle disposed between the first and second chambers for interrupting a flow of the freezing gas from the first chamber, the baffle disposed to provide a first opening through which the flow is directed to a region of the second chamber for exhaust from said second chamber to an area external to the first and second housings; and a gas pressure curtain comprising the exhaust and disposed at the second chamber to prevent atmosphere from the area external to the first and second housings from entering said housings.

In an expedient embodiment of the present invention, the first opening may be sized and shaped to accommodate movement of the food product through the first opening.

According to a favoured embodiment of the present invention, the baffle may be movable with respect to the first and second chambers for changing location of the region to which the flow of the freezing gas is directed.

In a preferred embodiment of the present invention, the baffle may comprise the, in particular common, wall and may be a longitudinal member sized and shaped to be disposed between the first and second housings.

According to an advantageous embodiment of the present invention, the longitudinal member may be constructed from a material selected from the group consisting of stainless steel, plastic, and a combination of stainless steel and plastic.

In an expedient embodiment of the present invention, the food freezer may be a freezer selected from the group consisting of a tunnel freezer, an impingement freezer, a spiral freezer, and an immersion freezer.

There is further provided herein a method of exhausting freezing gas from an internal chamber to an exhaust chamber of a food freezer, comprising: disposing a baffle between the internal chamber and the exhaust chamber; interrupting a flow of the freezing gas being exhausted from the internal chamber to the exhaust chamber; providing a first opening with the baffle between the internal chamber and the exhaust chamber through which the flow is directed to a region of the exhaust chamber; and establishing a gas pressure curtain with the freezing gas at the exhaust chamber for preventing atmosphere external to the internal chamber and the exhaust chamber from entering said chambers.

According to a favoured embodiment of the present invention, the wall may comprise a baffle, and the method may further comprise moving the baffle with respect to the internal chamber and exhaust chamber for adjusting a location of the first opening.

In a preferred embodiment of the present invention, the freezing gas may comprise a cryogenic substance.

According to an advantageous embodiment of the present invention, the cryogenic substance may be a gas selected from the group consisting of nitrogen, and carbon dioxide.

In an expedient embodiment of the present invention, the food freezer may be a freezer selected from the group consisting of a tunnel freezer, an impingement freezer, a spiral freezer, and an immersion freezer.

### Brief description of the drawings

For a more complete understanding of the present embodiment disclosures and as already discussed above, there are several options to embody as well as to improve the teaching of the present invention in an advantageous manner. To this aim, reference may be had to the claims dependent on claim 1 as well as on claim 11; further improvements, features and advantages of the present invention are explained below in more detail with reference to the particular and preferred embodiments by way of non-limiting example and to the appended drawing figures taken in conjunction with the following description of exemplary embodiments, of which:
- FIG. 1: shows a schematic side plan view in cross-section of an embodiment of a food freezer with internal exhaust of the present invention, said food freezer working in compliance with the method according to the present invention; and
- FIG. 2: shows a schematic top perspective view partially in cross-section of another embodiment of a food freezer with internal exhaust of the present invention, said food freezer working in compliance with the method according to the present invention.

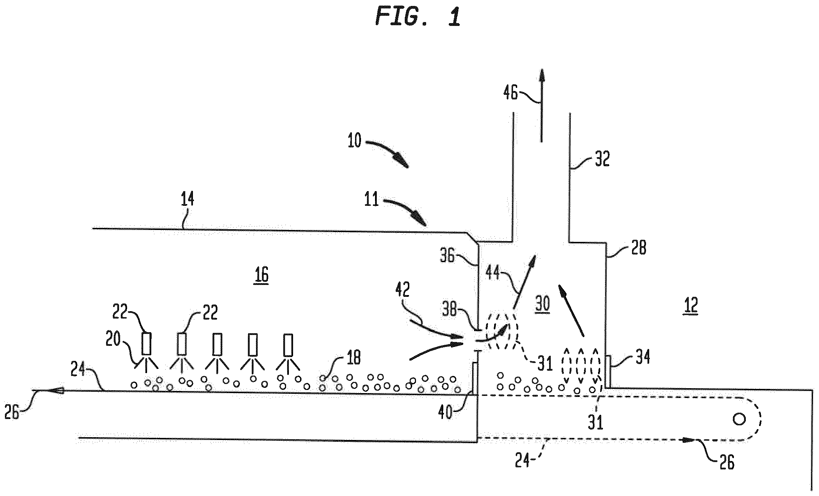

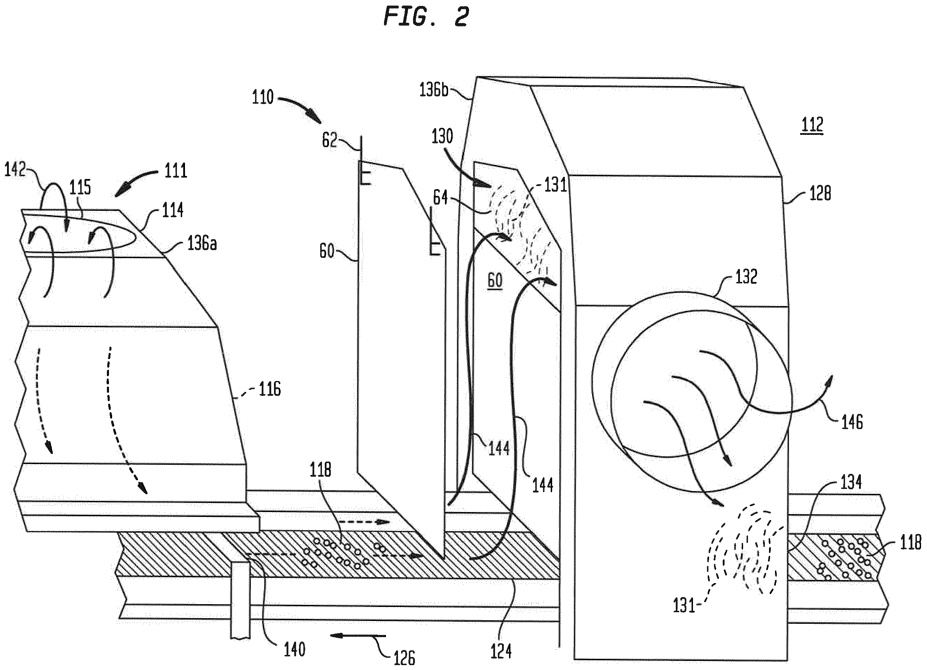

The accompanying drawings are included to provide a further understanding of the apparatus and method(s) provided herein and are incorporated in and constitute a part of this specification. The drawings illustrate various embodiments of the apparatus and method(s) provided herein and, together with the description, serve to explain the principles described herein but are not intended to limit the specification or any of the claims. In the accompanying drawings, equipment and features in FIG. 2 are labelled with a reference sign that is higher by 100 compared to corresponding equipment and features in FIG. 1.

### Detailed description of the drawings; best way of embodying the present invention

Before explaining the present inventive embodiments in detail, it is to be understood that the embodiments are not limited in its respective application to the details of construction and arrangement of parts illustrated in the accompanying drawings, since the present invention is capable of other embodiments and of being practiced or carried out in various ways. Also, it is to be understood that the phraseology or terminology employed herein is for the purpose of description and not of limitation.

In the following description, terms such a horizontal, upright, vertical, above, below, beneath and the like, are used solely for the purpose of clarity illustrating the present invention and should not be taken as words of limitation. The drawings are for the purpose of illustrating the present invention and are not intended to be to scale.

Referring to FIG. 1, there is shown generally at 10 an embodiment of the food freezer with an internal exhaust apparatus which includes a freezer 11, such as for example a tunnel freezer, mounted for operation in a space 12 of a food freezing or processing plant, or a factory.

The freezer can be used to chill, crust freeze or freeze any number of different types of food products 18.

The freezer can be a tunnel freezer, an impingement freezer and, with certain modifications, a spiral freezer or an immersion freezer.

For the sake of description and example herein, but not by way of limitation, reference herein shall be with respect to a tunnel food freezer.

The freezer 10 includes a housing 14 with an internal chamber 16 therein and in which food product 18 is subjected to a freezing gas 20 provided by spray nozzles 22. A conveyor belt 24 supports the food product 18 for transit through the internal chamber 16. The conveyor belt 24 can be continuous, and moves in a direction shown by the arrows 26.

The freezer 10 also includes an exhaust plenum 28 having an internal space 30. In FIG. 1, the housing 14 and the exhaust plenum 28 are shown adjacent each other; and can be either releasably attached or formed as an integral unit.

The internal space 30 is in communication with an exhaust stack 32 for emitting exhaust gases from the internal space 30 and the internal chamber 16 to the atmosphere external to the plant, as will be described below.

The plenum 28 includes an inlet 34 through which the conveyor belt 24 passes into the internal space 30. The inlet 34 may be provided with a stainless steel or a plastic curtain/curtains to prevent or limit air from the space 12 from being introduced into the internal space 30.

The housing 14 and the exhaust plenum 28 share a sidewall 36 having an adjustable opening 38 or port therein. By way of example only, the adjustable opening 38 is provided by a stainless steel sheet of material constructed as a shutter or movable door type mechanism.

By way of further example, the sheet of material can have an irregular-shaped slot on each of its sides for coaction with mechanical fasteners to position the sheet to provide the opening 38. Beneath the adjustable opening 38 in the sidewall 36 there is provided another inlet 40 into the internal chamber 16.

The inlet 40 may also be provided with a stainless steel or a plastic curtain/curtains to prevent the flow of freezing gas 20 at the internal chamber 16 into the internal space 30 of the exhaust plenum 28.

A blower (not shown) may be positioned above and in communication with the exhaust stack 32 at a roof of the factory to draw or remove the freezing gas 20 from the internal chamber 16. The removal of the freezing gas 20 is as shown by the arrows 42 directed through the opening 38 into the internal space 30 of the exhaust plenum 28, as shown by the arrows 44, and then out of (or exhausted from) the stack 32 as shown by the arrow 46.

The exhaust represented by the arrow 46 is to atmosphere external to the plant or factory in which the freezer 10 is disposed. The freezing gas 20 can be a cryogen substance selected from the group consisting of nitrogen, and carbon dioxide.

The adjustable opening 38 creates a pressure differential at where the flow 42 enters the internal space 30, i.e. a pressure curtain 31 at such locations and in the space 30 to thereby prevent warmer air or atmosphere in the factory space 12 from being pulled or drawn into the exhaust plenum 28 which would unnecessarily warm the exhaust and provide ice and snow accumulation on the belt 24 and in the plenum 28.

Referring to FIG. 2, there is shown generally at 110 another embodiment of a food freezer with an internal exhaust apparatus which includes a freezer 111, such as for example a tunnel freezer, mounted for operation in a space 112 of a food freezing or processing plant, or a factory.

The freezer 111 can be used to chill, crust freeze or freeze any number of different types of food products 118.

The freezer 111 can be a tunnel freezer, an impingement freezer and, with certain modifications, a spiral freezer or an immersion freezer. For the sake of description and example herein, but not by way of limitation, reference herein shall be with respect to a tunnel food freezer.

The freezer 110 includes a housing 114 with an internal chamber 116 therein and in which food product 118 is subjected to a freezing gas provided by spray nozzles, similar to that show in FIG. 1. A conveyor belt 124 supports the food product 118 for transit through the internal chamber 116. The conveyor belt 124 can be continuous, and moves in a direction shown by the arrows 126.

The freezer 110 also includes an exhaust plenum 128 having an internal space 130. In FIG. 2, the housing 114 and the exhaust plenum 128 are shown spaced apart from each other in order to better describe same; and can be either releasably attached or formed as an integral unit as will be further described below.

The internal space 130 is in communication with an exhaust stack 132 for emitting exhaust gases from the internal space 130 and the internal chamber 116 to the atmosphere external to the plant, as will be described below.

The plenum 128 includes an inlet 134 through which the conveyor belt 124 passes into the internal space 130. The inlet 134 may be provided with a plastic curtain/curtains to prevent or limit air from the space 112 from being introduced into the internal space 130.

The housing 114 has a corresponding sidewall 136a, while the exhaust plenum 128 has a corresponding sidewall 136b. The sidewalls 136a,136b become nested against each other when the housing 114 and the exhaust plenum 128 are brought together into contact with each other for a freezing operation.

The housing 114 also includes an inlet 140 to the internal chamber 116. The inlet 140 may also be provided with a stainless steel or a plastic curtain/curtains to prevent the flow of freezing gas at the internal chamber 116 into the internal space 130 of the exhaust plenum 128.

A blower 115 draws plant air from the space 112 into the internal chamber 116 as shown by the arrows 142. The air is subjected to the freezing gas within the chamber 116 to chill or freeze the product 118, after which the chilled gas exits the chamber 116 along the conveyor belt 124 toward the exhaust plenum 128.

A longitudinal member 60 constructed and referred to herein as a baffle plate (the baffle 60) is disposed between the housing 114 and the exhaust plenum 128 above the conveyor belt 124, so that the conveyor belt 124 with the food product 118 supported thereon can pass from the internal space 130 of the exhaust plenum 128 into the internal chamber 116 of the housing 114.

The baffle 60 is solid and constructed from, for example, a plastic or stainless steel, and includes mechanical fasteners 62 for releasable engagement with corresponding fasteners (not shown) arranged at an opening 64 to the internal space 130 of the plenum 128. In effect, the baffle 60 can be constructed of different sizes and/or hung at different positions at the opening 64 to provide a varying amount of clearance for access to the opening 64.

As shown in FIG. 2, arrows 144 show the flow of the exhaust along the conveyor belt 124 to further chill or freeze the food product 118 before the exhaust flow 144 is interrupted by the baffle 60 and diverted or directed upward along the baffle 60 before being introduced through the opening 64 and into the internal space 130 of the exhaust plenum 128.

The exhaust is then removed from the plenum 128 as shown by arrows 146 through a stack 132 to, for example, the roof of the plant, i.e. external to the plant space 112. As with the embodiment of FIG. 1, the freezing gas can be a cryogenic substance selected from the group consisting of nitrogen, and carbon dioxide.

The baffle 60 prevents the blower 115 from pulling air directly from the internal space 130 or the stack 132, so that any warmer air from the exhaust will not be subjected to the freezing gas and atmosphere of the internal chamber 116 whereupon frozen condensate would accumulate.

The baffle 60 can be placed at a greater height in the opening 64 to provide a labyrinth flow path for the exhaust flow proceeding to the internal space 130. In this manner of construction and arrangement of the baffle 60, the flow 144 avoids any warmer air of the space 112 which may be pulled into the inlet 134 and thereby avoid fouling the exhaust plenum 128 with frozen condensate.

The flow 144 also creates a pressure differential at where the flow proceeds upward along the baffle 60, i.e. a pressure curtain 131 at such location and at the opening 64 to the internal space 130 thereby prevents warmer air or atmosphere in the factory space 112 from being pulled or drawn into the exhaust plenum 128 which would unnecessarily warm the exhaust and cause ice and snow accumulation on the belt 124 and in the plenum 128.

It will be understood that the embodiments described herein are merely exemplary, and that one skilled in the art may make variations and modifications without departing from the scope of the present invention. All such variations and modifications are intended to be included within the scope of the present invention as described and claimed herein.

### List of reference signs

- 10: food freezer with internal exhaust apparatus (first embodiment, cf. FIG. 1)
- 11: freezer, in particular tunnel freezer
- 12: space of food freezing or processing factory or of food freezing or processing plant
- 14: housing, in particular first housing
- 16: internal chamber or fi rst chamber
- 18: food product
- 20: freezing gas
- 22: spray nozzle
- 24: conveyor belt
- 26: direction of movement of conveyor belt 24
- 28: exhaust chamber or exhaust plenum or second housing
- 30: internal space or second chamber
- 31: pressure curtain, in particular gas pressure curtain
- 32: exhaust stack
- 34: inlet
- 36: wall, in particular common wall and/or sidewall, between housing 14 and exhaust chamber or exhaust plenum or second housing 28
- 38: adjustable opening or adjustable port
- 40: further inlet into internal chamber or first chamber 16
- 42: flow or direction through adjustable opening or adjustable port 38
- 44: flow or direction into internal space or second chamber 30
- 46: flow or direction out of exhaust stack 32
- 60: longitudinal member, in particular baffle, for example baffle plate
- 62: mechanical fastener
- 64: opening to internal space or second chamber 130
- 110: food freezer with internal exhaust apparatus (second embodiment, cf. FIG. 2)
- 111: freezer, in particular tunnel freezer
- 112: space of food freezing or processing factory or of food freezing or processing plant
- 114: housing, in particular first housing
- 115: blower
- 116: internal chamber or fi rst chamber
- 118: food product
- 124: conveyor belt
- 126: direction of movement of conveyor belt 124
- 128: exhaust chamber or exhaust plenum or second housing
- 130: internal space or second chamber
- 131: pressure curtain, in particular gas pressure curtain
- 132: exhaust stack
- 134: inlet
- 136a: wall, in particular common wall and/or sidewall, of housing 114
- 136b: wall, in particular common wall and/or sidewall, of exhaust chamber or exhaust plenum or second housing 128
- 140: inlet
- 142: flow or direction from space 112 into internal chamber or first chamber 116
- 144: flow or direction along conveyor belt 124
- 146: flow or direction out of exhaust stack 132

## Claims

1. A food freezer (10; 110), comprising:
- a first housing (14; 114) having a first chamber (16; 116) arranged internally within for providing a freezing gas (20) to a food product (18; 118) within the first chamber (16; 116);
- a second housing (28; 128) having a second chamber (30; 130) arranged internally within and being in fluid communication with the first chamber (16; 116) for exhausting the freezing gas (20) from the first chamber (16; 116);
- an adjustable opening (38) disposed at an, in particular common, wall (36; 136a, 136b) between the first chamber (16; 116) and the second chamber (30; 130) for controlling a flow of the freezing gas (20) moving from the first chamber (16; 116) to the second chamber (30; 130), the adjustable opening (38) disposed to provide a flow path for the flow of the freezing gas (20) to a region of the second chamber (30; 130) for exhaust from said second chamber (30; 130) to an area external to the first housing (14; 114) and second housing (28; 128); and
- a pressure curtain (31; 131) comprising the exhaust and disposed at the second chamber (30; 130) to prevent atmosphere from the area external to the first housing (14; 114) and second housing (28; 128) from entering said housings (14, 28; 114, 128).

2. The food freezer according to claim 1, wherein the adjustable opening (38) comprises a mechanical shutter or movable door type mechanism for providing the flow path between the first chamber (16; 116) and the second chamber (30; 130).

3. The food freezer according to claim 1 or 2, wherein the adjustable opening (38) comprises a pair of movable plates which co-act for providing the flow path between the first chamber (16; 116) and the second chamber (30; 130).

4. The food freezer according to at least one of claims 1 to 3, wherein the adjustable opening (38) comprises a stainless steel material sheet movable with respect to the wall (36; 136a, 136b) for providing the flow path between the first chamber (16; 116) and the second chamber (30; 130).

5. The food freezer according to at least one of claims 1 to 4, wherein the adjustable opening comprises a baffle (60) disposed between the first chamber (16; 116) and the second chamber (30; 130) for interrupting the flow of the freezing gas from the first chamber (16; 116), the baffle (60) disposed to provide a first opening through which the flow is directed to a region of the second chamber (30; 130) for providing the exhaust from said second chamber (30; 130) to an area external to the first housing (14; 114) and second housing (28; 128).

6. The food freezer according to claim 5, wherein the first opening is sized and shaped to accommodate movement of the food product (18; 118) through the first opening.

7. The food freezer according to claim 5 or 6, wherein the baffle (60) is movable with respect to the first chamber (16; 116) and to the second chamber (30; 130) for changing location of the region to which the flow of the freezing gas (20) is directed.

8. The food freezer according to at least one of claims 5 to 7, wherein the baffle (60) comprises the, in particular common, wall and is a longitudinal member sized and shaped to be disposed between the first housing (14; 114) and the second housing (28; 128).

9. The food freezer according to claim 8, wherein the longitudinal member is constructed from a material selected from the group consisting of stainless steel, plastic, and a combination of stainless steel and plastic.

10. The food freezer according to at least one of claims 1 to 9, wherein the food freezer (10; 110) is a freezer selected from the group consisting of a tunnel freezer, an impingement freezer, a spiral freezer, and an immersion freezer.

11. A method of exhausting freezing gas (20) from an internal chamber (16; 116) to an exhaust chamber (28; 128) of a food freezer (10; 110) according to at least one of claims 1 to 10, comprising:
- disposing an, in particular common, wall (36; 136a, 136b) between the internal chamber (16; 116) and the exhaust chamber (28; 128);
- interrupting a flow of the freezing gas (20) being exhausted from the internal chamber (16; 116) to the exhaust chamber (28; 128);
- providing a first opening at the wall (36; 136a, 136b) between the internal chamber (16; 116) and the exhaust chamber (28; 128) through which the flow is directed to a region of the exhaust chamber (28; 128); and
- establishing a pressure curtain (31; 131) with the freezing gas (20) at the exhaust chamber (28; 128) for preventing atmosphere external to the internal chamber (16; 116) and the exhaust chamber (28; 128) from entering said chambers (16, 28; 116, 128).

12. The method according to claim 11, wherein the wall (36; 136a, 136b) comprises a baffle (60), and the method further comprises moving the baffle (60) with respect to the internal chamber (16; 116) and exhaust chamber (28; 128) for adjusting a location of the first opening.

13. The method according to claim 11 or 12, wherein the freezing gas (20) comprises a cryogenic substance.

14. The method according to claim 13, wherein the cryogenic substance is a gas selected from the group consisting of nitrogen, and carbon dioxide.

15. The method according to at least one of claims 11 to 14, wherein the food freezer (10; 110) is a freezer selected from the group consisting of a tunnel freezer, an impingement freezer, a spiral freezer, and an immersion freezer.

## Patentansprüche

1. Lebensmittelgefrieranlage (10; 110), aufweisend:
- ein erstes Gehäuse (14; 114) mit einer ersten Kammer (16; 116), die im Inneren angeordnet ist, um ein Gefriergas (20) für ein Lebensmittelprodukt (18; 118) innerhalb der ersten Kammer (16; 116) bereitzustellen;
- ein zweites Gehäuse (28; 128) mit einer zweiten Kammer (30; 130), die im Inneren der ersten Kammer (16; 116) angeordnet ist und mit dieser in Fluidverbindung steht, um das Gefriergas (20) aus der ersten Kammer (16; 116) abzuführen;
- eine einstellbare Öffnung (38), die an einer, insbesondere gemeinsamen, Wand (36; 136a, 136b) zwischen der ersten Kammer (16; 116) und der zweiten Kammer (30; 130) angeordnet ist, um eine Strömung des Gefriergases (20) zu steuern, das sich von der ersten Kammer (16; 116) zur zweiten Kammer (30; 130) bewegt, wobei die einstellbare Öffnung (38) so angeordnet ist, dass sie einen Strömungsweg für die Strömung des Gefriergases (20) zu einem Bereich der zweiten Kammer (30; 130) für den Auslass aus der zweiten Kammer (30; 130) zu einem Bereich außerhalb des ersten Gehäuses (14; 114) und des zweiten Gehäuses (28; 128) bereitstellt; und
- einen Druckvorhang (31; 131), der den Auslass aufweist und an der zweiten Kammer (30; 130) angeordnet ist, um zu verhindern, dass Atmosphäre aus dem Bereich außerhalb des ersten Gehäuses (14; 114) und des zweiten Gehäuses (28; 128) in diese Gehäuse (14, 28; 114, 128) eindringt.

2. Lebensmittelgefrieranlage gemäß Anspruch 1, wobei die einstellbare Öffnung (38) einen mechanischen Verschluss oder einen beweglichen türartigen Mechanismus aufweist, um den Strömungsweg zwischen der ersten Kammer (16; 116) und der zweiten Kammer (30; 130) bereitzustellen.

3. Lebensmittelgefrieranlage gemäß Anspruch 1 oder 2, wobei die einstellbare Öffnung (38) ein Paar beweglicher Platten aufweist, die zusammenwirken, um den Strömungsweg zwischen der ersten Kammer (16; 116) und der zweiten Kammer (30; 130) bereitzustellen.

4. Lebensmittelgefrieranlage gemäß mindestens einem der Ansprüche 1 bis 3, wobei die einstellbare Öffnung (38) ein Blech aus rostfreiem Stahl aufweist, das in Bezug auf die Wand (36; 136a, 136b) beweglich ist, um den Strömungsweg zwischen der ersten Kammer (16; 116) und der zweiten Kammer (30; 130) bereitzustellen.

5. Lebensmittelgefrieranlage gemäß mindestens einem der Ansprüche 1 bis 4, wobei die einstellbare Öffnung ein Ablenkelement (60) aufweist, das zwischen der ersten Kammer (16; 116) und der zweiten Kammer (30; 130) angeordnet ist, um die Strömung des Gefriergases aus der ersten Kammer (16; 116) zu unterbrechen, wobei das Ablenkelement (60) so angeordnet ist, dass es eine erste Öffnung bereitstellt, durch die die Strömung zu einem Bereich der zweiten Kammer (30; 130) geleitet wird, um den Auslass aus der zweiten Kammer (30; 130) in einen Bereich außerhalb des ersten Gehäuses (14; 114) und des zweiten Gehäuses (28; 128) bereitzustellen.

6. Lebensmittelgefrieranlage gemäß Anspruch 5, wobei die erste Öffnung so bemessen und geformt ist, dass sie die Bewegung des Lebensmittelprodukts (18; 118) durch die erste Öffnung ermöglicht.

7. Lebensmittelgefrieranlage gemäß Anspruch 5 oder 6, wobei das Ablenkelement (60) in Bezug auf die erste Kammer (16; 116) und auf die zweite Kammer (30; 130) beweglich ist, um die Lage des Bereichs zu ändern, auf den die Strömung des Gefriergases (20) gerichtet ist.

8. Lebensmittelgefrieranlage gemäß mindestens einem der Anspruch 5 bis 7, wobei das Ablenkelement (60) die, insbesondere gemeinsame, Wand aufweist und ein Längselement ist, das so bemessen und geformt ist, dass es zwischen dem ersten Gehäuse (14; 114) und dem zweiten Gehäuse (28; 128) angeordnet werden kann.

9. Lebensmittelgefrieranlage gemäß Anspruch 8, wobei das Längselement aus einem Material hergestellt ist, das aus der Gruppe ausgewählt ist, die aus rostfreiem Stahl, Kunststoff und einer Kombination aus rostfreiem Stahl und Kunststoff besteht.

10. Lebensmittelgefrieranlage gemäß mindestens einem der Anspruch 1 bis 9, wobei die Lebensmittelgefrieranlage (10; 110) eine Gefrieranlage ist, die aus der Gruppe ausgewählt ist, die aus einer Tunnelgefrieranlage, einer Prallgefrieranlage, einer Spiralgefrieranlage und einer Eintauchgefrieranlage besteht.

11. Verfahren zum Abführen von Gefriergas (20) aus einer Innenkammer (16; 116) zu einer Auslasskammer (28; 128) einer Lebensmittelgefrieranlage (10; 110) gemäß mindestens einem der Ansprüche 1 bis 10, aufweisend:
- Anordnen einer, insbesondere gemeinsamen, Wand (36; 136a, 136b) zwischen der Innenkammer (16; 116) und der Auslasskammer (28; 128);
- Unterbrechen einer Strömung des Gefriergases (20), das aus der Innenkammer (16; 116) in die Auslasskammer (28; 128) abgeleitet wird;
- Bereitstellen einer ersten Öffnung an der Wand (36; 136a, 136b) zwischen der Innenkammer (16; 116) und der Auslasskammer (28; 128), durch die die Strömung zu einem Bereich der Auslasskammer (28; 128) geleitet wird; und
- Einrichten eines Druckvorhangs (31; 131) mit dem Gefriergas (20) an der Auslasskammer (28; 128), um zu verhindern, dass Atmosphäre außerhalb der Innenkammer (16; 116) und der Auslasskammer (28; 128) in die Kammern (16, 28; 116, 128) eintritt.

12. Verfahren gemäß Anspruch 11, wobei die Wand (36; 136a, 136b) ein Ablenkelement (60) aufweist, und das Verfahren ferner das Bewegen des Ablenkelements (60) in Bezug auf die Innenkammer (16; 116) und Auslasskammer (28; 128) zum Einstellen einer Position der ersten Öffnung aufweist.

13. Verfahren gemäß Anspruch 11 oder 12, wobei das Gefriergas (20) eine kryogene Substanz aufweist.

14. Verfahren gemäß Anspruch 13, wobei die kryogene Substanz ein Gas ist, das aus der Gruppe ausgewählt wird, die aus Stickstoff und Kohlendioxid besteht.

15. Verfahren gemäß mindestens einem der Ansprüche 11 bis 14, wobei die Lebensmittelgefrieranlage (10; 110) eine Gefrieranlage ist, die aus der Gruppe ausgewählt wird, die aus einer Tunnelgefrieranlage, einer Prallgefrieranlage, einer Spiralgefrieranlage und einer Eintauchgefrieranlage besteht.

## Revendications

1. Congélateur d'aliments (10 ; 110), comprenant :
- un premier logement (14 ; 114) ayant une première chambre (16 ; 116) disposée à l'intérieur pour fournir un gaz de congélation (20) à un produit alimentaire (18 ; 118) à l'intérieur de la première chambre (16 ; 116) ;
- un second logement (28 ; 128) ayant une seconde chambre (30 ; 130) disposée à l'intérieur de la première chambre (16 ; 116) et en communication fluide avec celle-ci pour évacuer le gaz de congélation (20) de la première chambre (16 ; 116) ;
- une ouverture réglable (38) disposée au niveau d'une paroi (36 ; 136a, 136b), en particulier commune, entre la première chambre (16 ; 116) et la seconde chambre (30 ; 130) pour contrôler un écoulement du gaz de congélation (20) se déplaçant de la première chambre (16 ; 116) vers la seconde chambre (30 ; 130), l'ouverture réglable (38) étant disposée pour fournir un chemin d'écoulement pour l'écoulement du gaz de congélation (20) vers une région de la seconde chambre (30 ; 130) pour l'échappement de ladite seconde chambre (30 ; 130) vers une zone externe au premier logement (14; 114) et au second logement (28 ; 128) ; et
- un rideau de pression (31 ; 131) comprenant l'échappement et disposé au niveau de la seconde chambre (30 ; 130) pour empêcher l'atmosphère de la zone externe au premier logement (14 ; 114) et au second logement (28 ; 128) de pénétrer dans lesdits logements (14, 28 ; 114, 128).

2. Congélateur d'aliments selon la revendication 1, où l'ouverture réglable (38) comprend un obturateur mécanique ou un mécanisme de type porte mobile pour fournir le chemin d'écoulement entre la première chambre (16 ; 116) et la seconde chambre (30 ; 130).

3. Congélateur d'aliments selon la revendication 1 ou 2, où l'ouverture réglable (38) comprend une paire de plaques mobiles qui coopèrent pour fournir le chemin d'écoulement entre la première chambre (16 ; 116) et la seconde chambre (30 ; 130).

4. Congélateur d'aliments selon au moins une des revendications 1 à 3, où l'ouverture réglable (38) comprend une feuille de matériau en acier inoxydable mobile par rapport à la paroi (36 ; 136a, 136b) pour fournir le chemin d'écoulement entre la première chambre (16 ; 116) et la seconde chambre (30 ; 130).

5. Congélateur d'aliments selon au moins une des revendications 1 à 4, où l'ouverture réglable comprend un déflecteur (60) disposée entre la première chambre (16; 116) et la seconde chambre (30 ; 130) pour interrompre l'écoulement du gaz de congélation depuis la première chambre (16; 116), le déflecteur (60) étant disposé pour fournir une première ouverture à travers laquelle l'écoulement est dirigé vers une région de la seconde chambre (30 ; 130) pour fournir l'échappement de ladite seconde chambre (30 ; 130) vers une zone externe au premier logement (14 ; 114) et au second logement (28 ; 128).

6. Congélateur d'aliments selon la revendication 5, où la première ouverture est dimensionnée et formée pour permettre le mouvement du produit alimentaire (18 ; 118) à travers la première ouverture.

7. Congélateur d'aliments selon la revendication 5 ou 6, où le déflecteur (60) est mobile par rapport à la première chambre (16 ; 116) et à la seconde chambre (30 ; 130) pour changer l'emplacement de la région vers laquelle l'écoulement du gaz de congélation (20) est dirigé.

8. Congélateur d'aliments selon au moins une des revendications 5 à 7, où le déflecteur (60) comprend la paroi, en particulier commune, et est un élément longitudinal dimensionné et conformé pour être disposé entre le premier logement (14 ; 114) et le second logement (28 ; 128).

9. Congélateur d'aliments selon la revendication 8, où l'élément longitudinal est construit à partir d'un matériau choisi dans le groupe constitué par l'acier inoxydable, le plastique et une combinaison d'acier inoxydable et de plastique.

10. Congélateur d'aliments selon au moins une des revendications 1 à 9, où le congélateur d'aliments (10 ; 110) est un congélateur choisi dans le groupe constitué par un congélateur tunnel, un congélateur à impact, un congélateur en spirale et un congélateur à immersion.

11. Procédé d'évacuation de gaz de congélation (20) d'une chambre interne (16; 116) vers une chambre d'échappement (28 ; 128) d'un congélateur d'aliments (10 ; 110) selon au moins une des revendications 1 à 10, comprenant :
- disposer une paroi (36 ; 136a, 136b), en particulier commune, entre la chambre interne (16; 116) et la chambre d'échappement (28 ; 128) ;
- interrompre un écoulement du gaz de congélation (20) qui est évacué de la chambre interne (16 ; 116) vers la chambre d'échappement (28 ; 128) ;
- fournir une première ouverture au niveau de la paroi (36 ; 136a, 136b) entre la chambre interne (16 ; 116) et la chambre d'échappement (28 ; 128) à travers laquelle l'écoulement est dirigé vers une région de la chambre d'échappement (28 ; 128) ; et
- établir un rideau de pression (31 ; 131) avec le gaz de congélation (20) au niveau de la chambre d'échappement (28 ; 128) pour empêcher l'atmosphère extérieure à la chambre interne (16; 116) et à la chambre d'échappement (28 ; 128) de pénétrer dans lesdites chambres (16, 28 ; 116, 128).

12. Procédé selon la revendication 11, où la paroi (36 ; 136a, 136b) comprend un déflecteur (60), et le procédé comprend en outre déplacer le déflecteur (60) par rapport à la chambre interne (16 ; 116) et à la chambre d'échappement (28 ; 128) pour ajuster un emplacement de la première ouverture.

13. Procédé selon la revendication 11 ou 12, où le gaz de congélation (20) comprend une substance cryogénique.

14. Procédé selon la revendication 13, où la substance cryogénique est un gaz choisi dans le groupe constitué par l'azote et le dioxyde de carbone.

15. Procédé selon au moins une des revendications 11 à 14, où le congélateur d'aliments (10 ; 110) est un congélateur choisi dans le groupe constitué par un congélateur tunnel, un congélateur à impact, un congélateur en spirale et un congélateur à immersion.
